# FASCICULE DE BREVET EUROPEEN

(11) **EP 2 895 726 B1**
(45) Date de publication et mention de la délivrance du brevet: **16.11.2016**
(21) Numéro de dépôt: 13759751.4
(22) Date de dépôt: 10.09.2013
(51) Int. Cl.: F02K 9/10, F02K 9/72, F02K 9/94

(54) **DISPOSITIF DE PROPULSION HYBRIDE ANAÉROBIE À CARBURANT PRÉSENTE SOUS FORME DE SOLIDES DIVISÉS**
ANAEROBE HYBRIDANTRIEBSVORRICHTUNG MIT KRAFTSTOFF IN DER FORM VON GETEILTEN FESTSTOFFEN
ANAEROBIC HYBRID PROPULSION DEVICE WITH FUEL PRESENT IN THE FORM OF DIVIDED SOLIDS

(30) Priorité: 13.09.2012 FR 1202444
(43) Date de publication de la demande: 22.07.2015
(73) Titulaire: Airbus Defence and Space SAS, 78130 Les Mureaux (FR)
(72) Inventeur: FIGUS, Christophe, F-31280 Drémil Lafage (FR)
(74) Mandataire: Ipside
(86) Numéro de dépôt international: PCT/EP2013/068744
(87) Numéro de publication internationale: WO 2014/040998

(56) Documents cités:
- FR-A- 1 595 755
- US-A1- 2004 148 925
- US-A1- 2010 064 925
- US-B1- 6 357 357

## Description

La présente invention relève du domaine des dispositifs de propulsion anaérobies, typiquement utilisés dans la propulsion de satellites ou de fusées.

Elle concerne plus particulièrement un dispositif de propulsion hybride, dans lequel le carburant est stocké sous forme solide, tandis que le comburant (oxydant) est stocké sous forme liquide.

### Préambule et art antérieur

La propulsion dite « hybride », c'est-à-dire combinant un carburant solide et un comburant liquide, est connue depuis plus de cinquante ans. Elle fut développée principalement pour la propulsion de moteur fusée, puisqu'elle n'utilise pas l'air ambiant pour fournir un oxydant. Sa principale caractéristique est une forte poussée y compris en phase anaérobie, grâce à l'utilisation d'un comburant liquide.

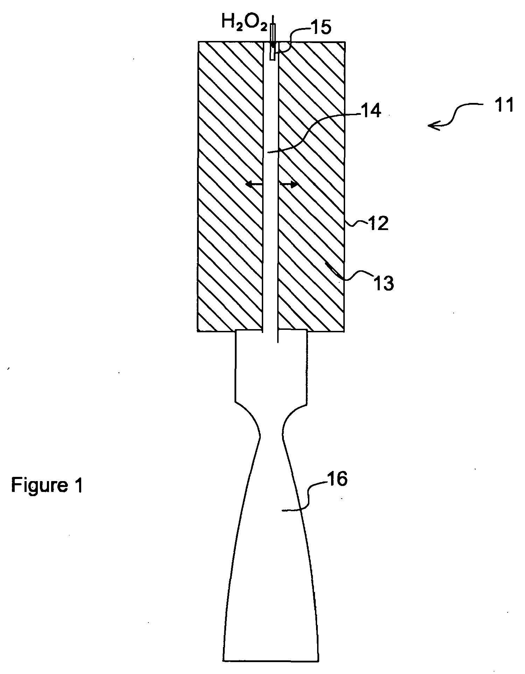

Dans la plupart des cas, le moteur 11 est constitué d'une chambre hermétique 12 dans laquelle est stocké par exemple un pain de poudre 13 (voir figure 1). Dans le pain de poudre 13 sont réalisés un ou plusieurs canaux 14 (faisant partie du volume de la chambre de combustion) dans lesquels est injecté un comburant, ici par un injecteur 15 situé en partie supérieure de la chambre de combustion. Le comburant liquide est injecté dans les canaux 14 à une température élevée (typiquement > 800 K) sous l'effet d'un allumeur pyrotechnique et/ou d'une décomposition catalytique. Sous l'effet de la température le pain de poudre 13 se vaporise au niveau des parois des canaux 14 et entre en réaction (combustion) avec le comburant. La détente des gaz ainsi générés (au travers d'une tuyère 16) crée une force de poussée.

Une fois la combustion initiée, le système est entretenu avec l'injection de comburant à température ambiante (typiquement 300 K), et la vaporisation du carburant solide/poudre.

Au cours de la combustion, le pain de poudre 13 se consomme et la taille des canaux 14 augmente. On nomme ce type fonctionnement, « combustion radiale », du fait de l'augmentation radiale de la taille des canaux.

Un tel moteur hybride est, par exemple, décrit dans le document brevet US 5.101.623 de Rockwell (1992).

Ce type de moteur présente l'inconvénient d'une augmentation progressive de la taille des canaux 14 au cours du temps, donc du volume de la chambre de combustion, et en conséquence d'une variation significative de la poussée du moteur au cours du temps.

Ce type de moteur est également peu adapté pour des volumes de pain de poudre/solide importants car il nécessite, pour limiter la variation de volume de la chambre de combustion durant la combustion, d'utiliser un canal (et un pain de poudre/solide) de grande longueur (en comparaison avec son diamètre). Ce type de contrainte, qui amène à des moteurs longs et fins, est peu compatible d'un aménagement sur un satellite.

Un moteur hydride selon l'état de la technique est décrit dans le document FR 1 595 755 A.

### Exposé de l'invention

L'invention vise à cet effet sous un premier aspect un dispositif de propulsion selon la revendication 1 comportant un dispositif de ségrégation disposé entre un réservoir de granules de carburant solide, et une chambre de combustion, le dispositif de ségrégation étant adapté à empêcher le passage de granules de carburant sous forme solide entre le réservoir et la chambre de combustion, mais comportant des orifices permettant le passage de carburant, une fois celui-ci rendu pâteux, liquide ou vaporisé.

Le réservoir de granules de carburant comporte un moyen d'application d'une pression sur les granules adaptée à les pousser vers le dispositif de ségrégation. Les moyens d'application d'une pression sont constitués d'une membrane déformable (élastomère par exemple) disposée en surface du volume de granules ou d'un piston appliqué sur ce volume. L'application d'une pression supérieure à la pression régnant dans la chambre de combustion lors de ladite combustion est nécessaire pour maintenir des granules de carburant plaqués contre le dispositif de ségrégation.

Les granules dont il est question sont de forme sensiblement convexe, par exemple sphérique (pour faciliter des mouvements de glissement d'une granule sur l'autre et donc l'écoulement d'un volume de granules dans un réservoir) ou polyédrique, les granules étant de diamètres compris dans une gamme de dimensions prédéterminée (typiquement quelques millimètres).

De la sorte, le carburant peut être stocké dans le réservoir, le comburant étant injecté dans la chambre de combustion, laquelle est portée à une température suffisante pour assurer la fusion du carburant présent dans le réservoir au voisinage immédiat du dispositif de ségrégation, puis son passage en phase liquide au travers du dispositif de ségrégation, enfin sa vaporisation sous l'effet de la température. Le carburant ainsi vaporisé entre en contact avec le comburant et une réaction chimique exothermique se produit entre eux, entretenant la combustion dans la chambre de combustion aussi longtemps que du comburant est injecté ou que du carburant est présent dans le réservoir au voisinage immédiat du dispositif de ségrégation.

Il est clair que ce dispositif, associé au choix d'un carburant présenté sous forme de solides divisés en granules, permet de maintenir en permanence du carburant au voisinage du dispositif de ségrégation, ce qui résout les problèmes de l'art antérieur d'un volume toujours croissant de la zone de combustion durant celle-ci. De même, ce dispositif assure un maintien de la symétrie de la zone de combustion, contrairement à l'art antérieur.

Avantageusement, le dispositif de ségrégation comporte une structure trouée dont la dimension des trous est inférieure à une dimension préalablement choisie en fonction du diamètre moyen des granules de carburant solide. Cette disposition est favorable à un mode de réalisation simple. La structure trouée peut être notamment une grille de dimension de maille choisie en fonction du diamètre moyen des granules.

Dans un autre mode de réalisation, le dispositif de ségrégation comporte une structure en matériau poreux, à porosité ouverte, et mouillable par le carburant, lorsque celui-ci est localement liquéfié sous l'action de la chaleur. Par porosité ouverte, on entend qu'un liquide mouillant la structure poreuse peut la traverser. Cette disposition est favorable à une meilleure isolation des granules situés dans le réservoir de granules, ce qui permet d'éviter que des granules éloignés de la surface du dispositif de ségrégation viennent à fondre ou à s'agréger.

Dans un mode particulier de réalisation, la chambre de combustion est de forme sensiblement cylindrique, le dispositif de ségrégation constituant au moins une partie de la surface latérale de ladite chambre de combustion. De cette manière, on obtient un fonctionnement équivalent à celui des propulseurs hybrides de l'art antérieur, mais sans l'inconvénient d'un volume de chambre de combustion croissant au cours de la combustion du carburant solide.

Dans un autre mode de réalisation, éventuellement utilisé en conjonction, le dispositif de ségrégation constitue au moins une partie de la surface supérieure de ladite chambre de combustion, c'est-à-dire la surface opposée à l'orifice d'éjection des gaz de combustion. De cette manière, il est possible d'alimenter par la face supérieure la chambre de combustion, en y ménageant par exemple des injecteurs de comburant sur la surface latérale.

Selon divers mode de réalisation, éventuellement utilisés en conjonction lorsque cela est techniquement possible,
- le dispositif de propulsion est de forme sensiblement à symétrie de révolution autour d'un axe dit vertical, et le réservoir de carburant est disposé autour de la chambre de combustion, à l'extrémité de celle-ci opposée à la tuyère d'éjection. Cette disposition permet de stocker le carburant solide à proximité immédiate de la chambre de combustion, ce qui contribue à la simplicité du dispositif. Alternativement, le réservoir de carburant peut être distant de la chambre de combustion, et le dispositif peut comporter un tuyau d'amenée de granules de carburant solide dans une chambre intermédiaire de stockage de carburant solide, ladite chambre intermédiaire de stockage étant disposée autour ou au dessus de la chambre de combustion.
- le réservoir de carburant comporte une membrane en élastomère adaptée à séparer au sein du réservoir une espace de stockage de granules et un espace de pressurisation, ledit espace de pressurisation comportant des orifices de pressurisation reliés à au moins un système d'injection de gaz. L'utilisation d'une membrane en élastomère permet une mise en oeuvre simple du dispositif, et permet une adaptation des moyens de pressurisation à des volumes non cylindriques.
- le réservoir de carburant comporte un ensemble de séparateurs radiaux, perpendiculaires à la surface du dispositif de ségrégation, ces séparateurs présentant une géométrie à gradient capillaire favorisant l'alimentation de la grille par la pate ou le liquide.

Grâce à cette disposition, le dispositif de propulsion peut être rallumé en vol, même lorsqu'une partie des granules de carburant solide ont fusionné en un seul bloc au voisinage du dispositif de ségrégation, après extinction du propulseur. En effet, les séparateurs radiaux déterminent des blocs de granules conformés chacun en arc de cercle (préférentiellement de quelques dizaines de degrés au maximum), et permettent le réchauffement local des bords latéraux blocs de granules, et leur glissement, sous l'effet de la pressurisation, vers le dispositif de ségrégation, ce qui permet la remise en marche du propulseur après un arrêt. L'espace crée par la disposition ortho-radiale des raidisseurs permet d'autre part de favoriser la migration par effet capillaire de la phase liquéfiée du carburant vers le dispositif à trous (ou matériau poreux).

L'invention vise sous un second aspect un propulseur anaérobie du type hybride, ledit propulseur comportant un dispositif de propulsion tel qu'exposé, un volume de carburant solide et un volume de comburant liquide, caractérisé en ce que le carburant solide se présente sous forme de solides divisés en granules (typiquement grains, poudre ou billes).

On entend ici par propulseur un dispositif de propulsion complété par son carburant et son comburant.

Dans un mode de réalisation particulier, le carburant comprend des billes de polyéthylène ou de polybutadiène Dans un autre mode de réalisation, le carburant comprend des billes de paraffine. Ces billes présentent avantageusement un diamètre de un à cinq millimètres.

L'invention vise également un satellite comprenant un dispositif ou un propulseur tels qu'exposés.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :
Figure 1 (déjà citée) : une représentation schématique d'un moteur hybride à chambre de combustion radiale, selon l'état de l'art,
Figure 2 : une représentation schématique d'un moteur hybride avec dispositif d'expulsion de solide,
Figure 3 : une représentation schématique d'un moteur hybride avec dispositif d'expulsion de solide, en début et en fin de combustion,
Figure 4 : une représentation schématique d'un moteur hybride avec dispositif d'expulsion de solide, et des éléments d'alimentation en comburant,
Figure 5 : une vue en coupe d'un dispositif selon l'invention, au niveau de la chambre de combustion.

### Description détaillée d'un mode de réalisation de l'invention

La présente invention, concerne un propulseur fusée « hybride » à combustion radiale. Le propulseur 20 tel que décrit ici à titre nullement limitatif est à symétrie de révolution autour d'un axe longitudinal X.

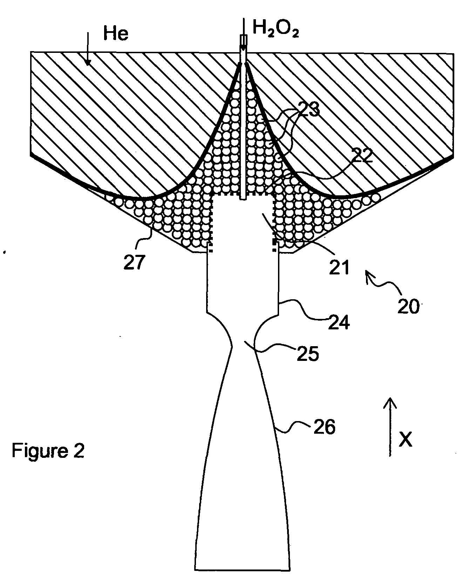

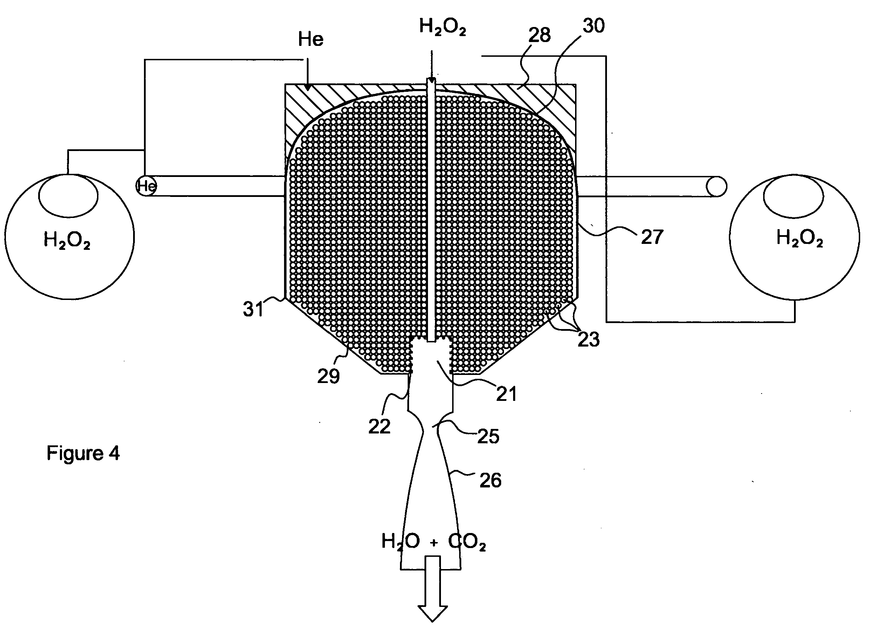

Comme on le voit sur les figures 2 et 4, le propulseur 20 comporte en premier lieu un réservoir 27 de granules de carburant, en second lieu un réservoir de comburant (non illustré sur les figures), enfin une chambre de combustion 21.

Contrairement à l'état de l'art, dans lequel le carburant est stocké à l'intérieur même de la chambre de combustion, typiquement sous forme d'un pain de poudre doté d'un canal central évidé, le carburant solide est ici configuré sous forme de solide divisé (poudre, billes, grains), de faible dimension (typiquement quelque millimètres), et est stocké au dehors de ladite chambre de combustion 21 au sein d'un réservoir dédié.

Comme énoncé plus haut, on entend ici par solides divisés un solide séparé en granules 23 de forme sensiblement convexe, par exemple sphérique ou polyédrique, les granules étant de diamètres compris dans une gamme de dimensions prédéterminées, de l'ordre de un à quelques millimètres de diamètre, sans que ces valeurs aient un caractère limitatif. Le matériau des granules est par exemple du polyéthylène, ou de la paraffine, ou tout autre carburant solide compatible avec une configuration sous forme de billes.

Dans le présent exemple de mise en oeuvre, tel qu'illustré figure 4, le réservoir de carburant 27 se présente sous forme d'un cylindre plus large que long, dont l'extrémité supérieure 28 (en haut sur les figures) est lenticulaire ou hémisphérique (ou toute autre forme), et dont l'extrémité inférieure 29, à proximité de la chambre de combustion 21, est sensiblement tronconique, formant un entonnoir vers la partie supérieure de la chambre de combustion 21.

La nature des matériaux composant le réservoir sort en tant que telle du cadre de l'invention. Le dimensionnement dudit réservoir de granules de carburant 27, donné ici à titre d'exemple non limitatif, est suffisant pour accommoder quelques centaines de kilos de carburant sous forme de granules.

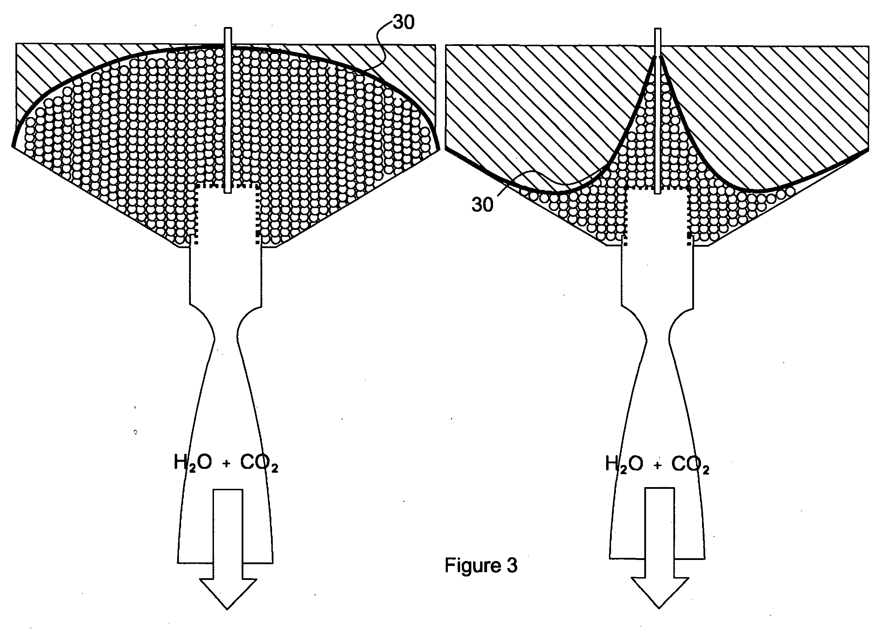

Dans le présent exemple de réalisation, le réservoir 27 de carburant comporte une membrane déformable 30 (également visible sur les figures 3a et 3b), disposée entre la surface supérieure 28 du réservoir 27 et les granules de carburant. Cette membrane déformable 30 est ici solidarisée au pourtour latéral du réservoir de carburant 27 au niveau de la jointure 31 entre la partie tronconique et la partie cylindrique dudit réservoir 27. La membrane déformable 30 forme ainsi une délimitation hermétique du réservoir de carburant 27 en deux parties, permettant de ce fait la pressurisation du volume contenant les granules de carburant. Dans l'exemple illustré ici, la partie supérieure du réservoir de carburant 27 est pressurisée avec du gaz, par exemple de l'hélium.

La membrane déformable 30 est suffisamment souple pour pouvoir épouser presque complètement la surface inférieure du réservoir 27, lorsque cette partie est vidée de ses granules de carburant. Dans le présent exemple, cette membrane est réalisée en élastomère, mais tout autre matériau déformable et chimiquement inerte vis à vis du carburant, peut être considérée.

Le niveau de pressurisation considéré est supérieur ou au moins égal à la pression régnant dans la chambre de combustion, lorsque le propulseur est en régime établi.

En ce qui concerne le réservoir de comburant, celui-ci est de type et de dimensions connus en soi. Il stocke un comburant tel que H2O2, ou tout autre comburant compatible avec le carburant choisi.

La chambre de combustion 21, disposée ici, mais non limitativement, directement sous le réservoir 27 de granules de carburant, se présente sous la forme d'un canal sensiblement cylindrique, ledit canal étant limité en sa périphérie haute, sur un segment du cylindre délimitant la chambre de combustion 21, par une grille ou une surface en matériau poreux désignée dans la suite de la description par "dispositif de ségrégation de carburant" 22.

Ce dispositif de ségrégation de carburant 22 sépare le réservoir de granules de carburant 27 de la chambre de combustion 21. Son but est également de permettre, sur sa face tournée vers la chambre de combustion 21, la mise au contact du comburant injectée dans ladite chambre de combustion avec du carburant passé sous forme liquide ou gazeuse.

Dans une variante de réalisation, le dispositif de ségrégation de carburant 22 est disposé en partie supérieure de la chambre de combustion, et présente donc une forme de disque. Des combinaisons de ces deux modes de réalisation, ou d'autres modes de réalisation sont également envisageables, tant qu'une partie de la surface de la chambre de combustion 21 est constituée d'un tel dispositif de ségrégation de carburant 22.

La chambre de combustion 21 se prolonge en partie basse (selon l'axe longitudinal X) par une chambre de post combustion 24, de type connu en soi, puis par un col 25 et une tuyère 26, également connus en soi.

Les lois de dimensionnement de la chambre de combustion 21, hors zone du dispositif de ségrégation de carburant 22, de même que les matériaux la constituant, sont connus de l'homme du métier, et sortent du cadre de la présente invention. Cette chambre de combustion 21 n'est donc pas détaillée plus avant ici.

Le dispositif de ségrégation de carburant 22 comporte, dans le présent exemple non limitatif de réalisation, une pluralité de trous de petites dimensions qui permettent le passage de liquide ou de gaz, et notamment le passage de carburant et donc l'alimentation en carburant de la chambre de combustion, lorsque le carburant se liquéfie ou se vaporise sous l'effet d'une température élevée. Une telle température est observée à la surface du dispositif de ségrégation de carburant 22 lorsque le comburant est initialement injecté à haute température dans la chambre de combustion 21, ou lorsque la combustion est installée de façon stable.

Les trous du dispositif de ségrégation de carburant 22 sont suffisamment petits pour bloquer l'écoulement du carburant lorsqu'il est sous forme solide, c'est à dire sous forme de granules. Dans le présent exemple non limitatif, les granules présentent un diamètre de deux à trois millimètres, avec un diamètre de pore maximum de un millimètre environ. Ces dimensions dépendent éventuellement du matériau constituant le carburant solide.

Le nombre de trous du dispositif de ségrégation de carburant 22 est suffisant pour assurer une débit de carburant liquide compatible avec les objectifs de volume de carburant consommé par seconde, et donc de poussée du propulseur 20.

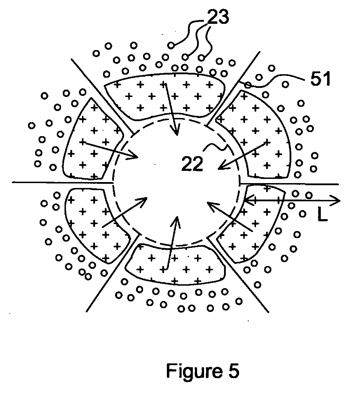

Le dispositif de ségrégation 22 comporte, en sa partie externe, c'est à dire au sein du réservoir de carburant 27, une série de séparateurs 51 (voir figure 5), ici répartis angulairement de façon régulière autour de la surface du dispositif de ségrégation 22.

Ces séparateurs 51 sont des éléments plans, disposés verticalement (c'est à dire selon l'axe longitudinal X) et sensiblement selon la normale locale à la surface du dispositif de ségrégation. Ces séparateurs 51 ont pour fonction de découper la zone du réservoir 27 proche de la surface du dispositif de ségrégation 22 en secteurs angulaires de quelques dizaines de degrés d'arc au maximum. L'arrangement de ces séparateurs 51 en secteurs géométriques favorise l'alimentation capillaire du dispositif de ségrégation par du carburant en phase pâteuse. Leur longueur radiale L (perpendiculairement à l'axe longitudinal), est choisie supérieure à l'épaisseur de la zone du réservoir 27 dans laquelle les granules passent en phase pâteuse lors de leur réchauffement.

### Mode de fonctionnement

De la même façon que selon l'état de l'art, le comburant est initialement injecté à haute température (grâce à un allumage pyrotechnique et/ou à une décomposition catalytique) afin de vaporiser les grains de carburant en contact avec le dispositif de ségrégation de carburant. Ceux-ci sous l'effet de la chaleur se transforment successivement en phase pâteuse, liquide et vapeur. Une fois la combustion amorcée celle-ci est entretenue par l'injection de comburant à température ambiante et par l'alimentation du dispositif de ségrégation de carburant par des grains de carburants.

Le carburant conformé sous forme de granules permet donc une alimentation continue du dispositif de ségrégation de carburant 22. Comme on le voit sur les figures 3a et 3b, la membrane en élastomère 30 du réservoir de carburant 27 se déforme progressivement, au cours de la consommation du carburant par la combustion. Elle vient finalement épouser la surface de la partie basse du réservoir 27, ou au moins s'en approcher, de manière à chasser les granules vers le dispositif de ségrégation le plus longtemps possible, et éviter l'apparition d'un volume de granules inutilisé lors de la combustion.

Dès l'injection de comburant stoppée, la combustion s'arrête, la phase pâteuse du carburant se solidifie dans le dispositif de ségrégation de carburant 22. Une partie des granules de carburant solide ont fusionné en blocs séparés par les séparateurs 51, au voisinage du dispositif de ségrégation 22, après extinction du propulseur

Il est possible de ré-allumer le moteur et injectant de nouveau un comburant chaud et ainsi ré-initier le cycle décrit précédemment. En effet, les séparateur radiaux 50 déterminent des blocs de granules conformés chacun en arc de cercle (préférentiellement de quelques dizaines de degrés au maximum). Ces séparateurs 50 permettent le réchauffement local des bords latéraux des blocs de granules formés lors du refroidissement desdits granules, ainsi que leur glissement, sous l'effet de la pressurisation, vers le dispositif de ségrégation 22, ce qui permet la remise en marche du propulseur après un arrêt.

### Avantages

L'utilisation de carburant sous forme de grains (billes) permet avantageusement de disposer celui-ci dans des géométries très compactes, comme un cylindre de grand diamètre et de faible hauteur ou encore dans un réservoir sphérique. L'alimentation en grains pouvant être assurée par un système de pressurisation par membrane ou par piston.

L'utilisation du dispositif de ségrégation de carburant permet avantageusement de maintenir le volume de la chambre de combustion constant au cours de la combustion. Il permet aussi de favoriser une combustion homogène avec la multiplication de sites de vaporisation (les trous du dispositif de ségrégation de carburant) et le développement d'une couche limite.

## Revendications

1. Dispositif de propulsion anaérobie de type hybride, le dispositif comportant un dispositif de ségrégation (22) disposé entre un réservoir (27) de granules (23) de carburant solide, et une chambre de combustion (21), le dispositif de ségrégation (22) étant adapté à empêcher le passage de granules (23) de carburant sous forme solide entre le réservoir (27) et la chambre de combustion (21), mais comportant des orifices permettant le passage de carburant, une fois celui-ci rendu pâteux, liquidé ou vaporisé,
le réservoir (27) de granules (23) de carburant comportant des moyens d'application sur les granules d'une pression adaptée à les pousser vers le dispositif de ségrégation, **caractérisé en ce que** : lesdits moyens sont constitués d'une membrane déformable,(30) disposée en surface du volume de granules (23).

2. Dispositif selon la revendication 1, **caractérisé en ce que** le dispositif de ségrégation (22) comporte une structure trouée dont la dimension des trous est inférieure à une dimension préalablement choisie en fonction du diamètre moyen des granules de carburant solide.

3. Dispositif selon l'une des revendications 1 ou 2, **caractérisé en ce que** le dispositif de ségrégation (22) comporte une structure en matériau poreux à porosité ouverte, et mouillable par le carburant, lorsque celui-ci est localement liquéfié sous l'action de la chaleur.

4. Dispositif selon l'une quelconque des revendications 1 à 3, **caractérisé en ce que** la chambre de combustion (21) est de forme sensiblement cylindrique, le dispositif de ségrégation (22) constituant au moins une partie de la surface latérale de ladite chambre de combustion (21).

5. Dispositif selon l'une quelconque des revendications 1 à 4, **caractérisé en ce que** le dispositif de ségrégation (22) constitue au moins une partie de la surface supérieure de ladite chambre de combustion, c'est-à-dire la surface opposée à l'orifice d'éjection des gaz de combustion.

6. Dispositif selon l'une quelconque des revendications 1 à 5, **caractérisé en ce que** le dispositif de propulsion est de forme sensiblement à symétrie de révolution autour d'un axe dit vertical, et le réservoir de carburant (27) est disposé autour de la chambre de combustion (21), à l'extrémité de celle-ci opposée à la tuyère d'éjection (16).

7. Dispositif selon l'une quelconque des revendications 1 à 6, **caractérisé en ce que** le réservoir (27) de carburant comporte une membrane en élastomère (30) adaptée à séparer au sein du réservoir (27) une espace de stockage de granules (23) et un espace de pressurisation, ledit espace de pressurisation comportant des orifices de pressurisation reliés à au moins un système d'injection de gaz.

8. Dispositif selon l'une quelconque des revendications 1 à 7, **caractérisé en ce que** le réservoir de carburant (27) comporte un ensemble de séparateurs radiaux (51), perpendiculaires à la surface du dispositif de ségrégation (22), ces séparateurs (51) présentant une géométrie à gradient capillaire favorisant l'alimentation du dispositif de ségrégation (22) par la pate ou le liquide.

9. Propulseur anaérobie du type hybride, comportant un dispositif de propulsion selon l'une quelconque des revendications 1 à 8, un volume de carburant solide et un volume de comburant liquide, **caractérisé en ce que** le carburant solide se présente sous forme de solides divisés en granules.

10. Propulseur selon la revendication 9, **caractérisé en ce que** le carburant comprend des billes de polyéthylène et/ou de polybutadiène et/ou de paraffine

11. Propulseur selon l'une quelconque des revendications 9 à 10, **caractérisé en ce que** les billes présentent un diamètre de un à cinq millimètres.

12. Satellite comportant un propulseur suivant l'une quelconque des revendications 9 à 11.

## Patentansprüche

1. Anaerobe Hybridantriebsvorrichtung, wobei die Vorrichtung eine Segregationsvorrichtung (22) aufweist, die zwischen einem Behälter (27) für Granulat (23) von festem Kraftstoff und einer Brennkammer (21) angeordnet ist, wobei die Segregationsvorrichtung (22) geeignet ist, den Durchgang von Granulat (23) von Kraftstoff in fester Form zwischen dem Behälter (27) und der Brennkammer (21) zu verhindern, aber Öffnungen aufweist, die den Durchgang von Kraftstoff ermöglichen, sobald dieser pastös, flüssig oder zu Dampf gemacht ist, wobei der Behälter (27) für Granulat (23) von Kraftstoff Mittel zum Aufbringen eines Drucks auf das Granulat aufweist, der geeignet ist, es in Richtung der Segregationsvorrichtung zu schieben, **dadurch gekennzeichnet, dass** die Mittel aus einer verformbaren Membran (30) gebildet sind, die auf der Oberfläche des Granulatvolumens (23) angeordnet ist.

2. Vorrichtung nach Anspruch 1, **dadurch gekennzeichnet, dass** die Segregationsvorrichtung (22) eine durchlöcherte Struktur aufweist, deren Größe der Löcher kleiner als eine Größe ist, die zuvor in Abhängigkeit von dem mittleren Durchmesser des Granulats von festem Kraftstoff ausgewählt worden ist.

3. Vorrichtung nach einem der Ansprüche 1 oder 2, **dadurch gekennzeichnet, dass** die Segregationsvorrichtung (22) eine Struktur aus offenporigem porösen Material, die durch den Kraftstoff benetzbar ist, aufweist, wenn dieser unter Wärmeeinwirkung örtlich verflüssigt wird.

4. Vorrichtung nach einem der Ansprüche 1 bis 3, **dadurch gekennzeichnet, dass** die Brennkammer (21) von im Wesentlichen zylindrischer Form ist, wobei die Segregationsvorrichtung (22) mindestens einen Teil der Seitenfläche der Brennkammer (21) bildet.

5. Vorrichtung nach einem der Ansprüche 1 bis 4, **dadurch gekennzeichnet, dass** die Segregationsvorrichtung (22) mindestens einen Teil der oberen Fläche der Brennkammer, das heißt die Fläche, die der Öffnung zum Ausstoßen der Verbrennungsgase gegenüberliegt, bildet.

6. Vorrichtung nach einem der Ansprüche 1 bis 5, **dadurch gekennzeichnet, dass** die Antriebsvorrichtung eine im Wesentlichen rotationssymmetrische Form um eine sogenannte vertikale Achse aufweist und der Kraftstoffbehälter (27) um die Brennkammer (21) an dem Ende von dieser, das der Auslassdüse (16) gegenüberliegt, angeordnet ist.

7. Vorrichtung nach einem der Ansprüche 1 bis 6, **dadurch gekennzeichnet, dass** der Kraftstoffbehälter (27) eine Membran aus Elastomer (30) aufweist, die geeignet ist, in dem Behälter (27) einen Raum zum Speichern des Granulats (23) und einen Druckbeaufschlagungsraum zu trennen, wobei der Druckbeaufschlagungsraum Öffnungen zur Druckbeaufschlagung aufweist, die mit mindestens einem Gaseinspritzsystem verbunden sind.

8. Vorrichtung nach einem der Ansprüche 1 bis 7, **dadurch gekennzeichnet, dass** der Kraftstoffbehälter (27) eine Anordnung von radialen Separatoren (51) aufweist, die senkrecht zu der Oberfläche der Segregationsvorrichtung (22) sind, wobei diese Separatoren (51) eine Geometrie mit Kapillargradienten aufweisen, die die Versorgung der Segregationsvorrichtung (22) mit der Paste oder der Flüssigkeit begünstigt.

9. Anaerobes Triebwerk, umfassend eine Antriebsvorrichtung nach einem der Ansprüche 1 bis 8, ein Volumen aus festem Kraftstoff und ein Volumen aus flüssigem Kraftstoff, **dadurch gekennzeichnet, dass** der feste Kraftstoff in Form von Feststoffen, die in Granulat geteilt sind, vorliegt.

10. Triebwerk nach Anspruch 9, **dadurch gekennzeichnet, dass** der Kraftstoff Kugeln aus Polyethylen und/oder aus Polybutadien und/oder aus Paraffin aufweist.

11. Triebwerk nach einem der Ansprüche 9 bis 10, **dadurch gekennzeichnet, dass** die Kugeln einen Durchmesser von einem bis fünf Millimeter aufweisen.

12. Satellit, der ein Triebwerk nach einem der Ansprüche 9 bis 11 aufweist.

## Claims

1. Anaerobic propulsion device of the hybrid type, the device comprising a segregation device (22) arranged between a reservoir (27) of granules (23) of solid fuel and a combustion chamber (21), the segregation device (22) being designed to prevent granules (23) of fuel in solid form from passing between the reservoir (27) and the combustion chamber (21) but comprising orifices that allow the passage of fuel once this fuel has become pasty, liquid or vaporized, the reservoir (27) of fuel granules (23) comprising means for applying to the granules a pressure designed to push them toward the segregation device, **characterized in that** said means consist of a deformable membrane (30) arranged at the surface of the volume of granules (23).

2. Device according to Claim 1, **characterized in that** the segregation device (22) comprises a holed structure, the dimension of the holes of which is smaller than a dimension chosen beforehand as a function of the mean diameter of the solid-fuel granules.

3. Device according to either of Claims 1 and 2, **characterized in that** the segregation device (22) comprises a structure made of porous material with open pores, wettable by the fuel when this fuel is locally liquefied under the action of heat.

4. Device according to any one of Claims 1 to 3, **characterized in that** the combustion chamber (21) is of substantially cylindrical shape, the segregation device (22) constituting at least part of the lateral surface of said combustion chamber (21).

5. Device according to any one of Claims 1 to 4, **characterized in that** the segregation device (22) constitutes at least part of the upper surface of said combustion chamber, namely the surface opposite to the ejection orifice for the combustion gases.

6. Device according to any one of Claims 1 to 5, **characterized in that** the propulsion device is of the shape substantially exhibiting symmetry of revolution about an axis referred to as a vertical axis, and the fuel reservoir (27) is arranged around the combustion chamber (21), at the opposite end thereof to the jet pipe (16).

7. Device according to any one of Claims 1 to 6, **characterized in that** the fuel reservoir (27) comprises an elastomer membrane (30) designed to separate, within the reservoir (27), a space for the storage of granules (23) and a pressurizing space, said pressurizing space comprising pressurizing orifices connected to at least one gas injection system.

8. Device according to any one of Claims 1 to 7, **characterized in that** the fuel reservoir (27) comprises a set of radial dividers (51) which are perpendicular to the surface of the segregation device (22), these dividers (51) having a geometry with a capillary gradient encouraging the supply of the segregation device (22) with the paste or liquid.

9. Anaerobic rocket engine of the hybrid type, comprising a propulsion device according to any one of Claims 1 to 8, a volume of solid fuel and a volume of liquid oxidant, **characterized in that** the solid fuel takes the form of solids divided into granules.

10. Rocket engine according to Claim 9, **characterized in that** the fuel comprises beads made of polyethylene and/or of polybutadiene and/or of paraffin.

11. Rocket engine according to either one of Claims 9 and 10, **characterized in that** the beads have a diameter of one to five millimeters.

12. Satellite comprising a rocket engine according to any one of Claims 9 to 11.
